# EUROPÄISCHE PATENTSCHRIFT

(11) **EP 3 912 941 B1**
(45) Veröffentlichungstag und Bekanntmachung des Hinweises auf die Patenterteilung: **08.03.2023**
(21) Anmeldenummer: 21174294.5
(22) Anmeldetag: 18.05.2021
(51) Int. Cl.: B65G 59/10

(54) **VORRICHTUNG UND VERFAHREN ZUM SEPARIEREN VON SCHALEN AUS EINEM STAPEL AUS MEHREREN SCHALEN**
DEVICE AND METHOD FOR SEPARATING TRAYS FROM A PLURALITY OF TRAYS
DISPOSITIF ET PROCÉDÉ DE SÉPARATION DE PLATEAUX D'UNE PILE DE PLUSIEURS PLATEAUX

(30) Priorität: 19.05.2020 DE 102020113526
(43) Veröffentlichungstag der Anmeldung: 24.11.2021
(73) Patentinhaber: VEMAG Maschinenbau GmbH, 27283 Verden/Aller (DE)
(72) Erfinder: Streu, Nico, 27367 Ahausen (DE); Flammann, Uwe, 27308 Kirchlinteln (DE); Hiller, Klaus, 27313 Dörverden (DE)
(74) Vertreter: Eisenführ Speiser

(56) Entgegenhaltungen:
- EP-A1- 0 267 118
- CA-A- 1 133 528
- US-A- 2 445 958
- US-A- 3 297 201
- US-A1- 2007 278 240

## Beschreibung

Die Erfindung betrifft eine Vorrichtung zum Separieren von einzelnen Schalen aus einem Stapel mehrerer Schalen zum Aufnehmen von Lebensmitteln, mit einem Maschinengestell zum Befestigen von Komponenten der Vorrichtung, einer Halteeinrichtung zum Halten des Stapels, einer Trenneinrichtung zum Separieren einzelner Schalen aus dem Stapel, welche ein Trennelement aufweist, das ausgebildet ist, um mindestens mit der jeweils untersten Schale des Stapels in Eingriff zu kommen. Die Erfindung betrifft ferner ein Verfahren zum Separieren von Schalen aus einem Stapel aus mehreren Schalen.

Solche Vorrichtungen und Verfahren werden zum Separieren von Schalen oder ähnlichen Behältern zur Aufnahme von Lebensmitteln verwendet. Die Schale weist häufig einen radial abstehenden Randbereich und einen Boden auf, die mittels häufig sich nach oben zum Rand erweiternde Wandbereiche verbunden sind, um einen Raum für das aufzunehmende Lebensmittel zu schaffen.

Eine Vorrichtung zum Separieren von Schalen nach dem Oberbegriff von Anspruch 1 wird beispielsweise in US 3 297 201 A, EP 0 267 118 A1 und US 2 445 958 A offenbart.

Die Halteeinrichtung greift im Stand der Technik zumeist am Rand der Schale an. Nachteilig hierbei ist, dass der Rand der Schale aufgrund oft vorkommender größerer Formabweichungen deformiert werden kann. Im Stand der Technik werden zum Vereinzelten der untersten Schale von dem Stapel rotierende Trennscheiben verwendet, um in einen Spalt zwischen die Ränder benachbarter Schalen einzudringen. Derartige Vorrichtungen werden beispielsweise in der CA 1 133 528 A und US 2007/278240 A1 offenbart. Aufgrund der beschriebenen Formungenauigkeiten der Ränder (unförmige Ränder) und größerer Gewichte des gesamten Stapels gelingt es häufig bei den bekannten Vorrichtungen nicht, eine unterste Schale sauber zu separieren, denn die Trennscheibe findet den Spalt häufig nicht und zerstört somit Teile der Schalen, sodass der Entstapelbetrieb unterbrochen wird.

Aufgabe der Erfindung ist es, eine Vorrichtung und ein Verfahren zum Separieren von Schalen aus einem Stapel anzugeben, die zuverlässiger arbeiten.

Gemäß eines ersten Aspektes der Erfindung wird die Aufgabe gelöst durch eine Vorrichtung der eingangs genannten Art, bei der die Halteeinrichtung mindestens ein im Bereich des Bodens der untersten Schale des Stapels mittels einer Antriebseinrichtung bewegbar gelagertes Boden-Tragelement zum temporären Tragen des Stapels aufweist, welches so ausgebildet ist, dass es temporär den Stapel von unten trägt und so aus dem Bereich des Bodens der untersten Schale wegbewegt werden kann, dass die unterste Schale in Richtung nach unten von dem Stapel separierbar ist, während der Stapel ohne die unterste Schale in der Halteeinrichtung verbleibt, und eine Antriebseinrichtung zum Bewegen des Boden-Tragelements vorgesehen ist. (Anspruch 1)

Erfindungsgemäß weist die Vorrichtung ein sogenanntes Boden-Tragelement auf, welches temporär den Stapel trägt. Das Boden-Tragelement wird in seiner Bewegung so gesteuert und ist so ausgebildet, dass es vorzugsweise so unter die unterste Schale bewegt werden kann, dass es temporär am Boden der untersten Schale mit dieser in Kontakt kommt und zeitweilig das Gewicht des gesamten Stapels vollständig oder weitestgehend trägt. Vorzugsweise wird das Boden-Tragelement in dem Moment in den Bereich des Bodens der untersten Schale bewegt, in dem das mindestens eine Trennelement der Trenneinrichtung zum Separieren einzelner Schalen, hier der untersten Schale von dem Rest des Stapels zwischen die unterste und zweitunterste Schale eindringen will, um die Separierung zu bewirken. Mittels des Boden-Tragelements wird der Stapel in einem entscheidenden Moment des Separierprozesses gut ausgerichtet dadurch, dass das Boden-Tragelement oder mehrere Boden-Tragelemente den gesamten Stapel trägt bzw. tragen. In diesem Augenblick kann dann das Trennelement sehr gut zwischen die zu separierenden Schalen hineinbewegt, also sozusagen eingefädelt werden. In vorteilhafter Weise wird durch das Boden-Tragelement der Umstand ausgenutzt, dass der Bereich des Bodens einerseits geringere Formungenauigkeiten als die Ränder der Schale aufweist und auch eine größere Fläche aufweist, sodass eine bessere Ausrichtung der untersten Schale und damit des gesamten Stapels erreicht werden kann, im Vergleich zu den vorbekannten Separiervorrichtungen, bei denen der Stapel in der Regel oder ausschließlich im Bereich des Randes der Schale(n) mittels entsprechender Bauteile getragen wird. Erfindungsgemäß wird zum Bewegen des Boden-Tragelementes eine Antriebseinrichtung verwendet, welche optional alternativ verschiedene Bewegungsbahnen des Boden-Tragelementes realisieren kann. Beispielsweise und bevorzugt kann das Boden-Tragelement mit Hilfe der Antriebseinrichtung und geeigneter Lagerungen mittels einer Drehbewegung in den Bereich der untersten Schale hineinbewegt werden beziehungsweise aus dem Bereich der untersten Schale herausbewegt werden im weiteren Vorgang; alternativ kann aber auch eine translatorische Bewegung des Boden-Tragelementes mittels der Antriebseinrichtung und entsprechender Lagerungen, beispielsweise einer Linearführung realisiert werden. Auch andere Bewegungsbahnen sind erfindungsgemäß. Die Erfindung nutzt also synergetisch das - oder auch mehrere - Boden-Tragelement, welche wie beschrieben bewegbar sind, zusammen mit einem Trennelement der Trenneinrichtung zusammen mit einer Antriebseinrichtung mit zugehörigen Lagerungen für die Bauteile, insbesondere das Boden-Tragelement.

Gemäß eines zweiten Aspektes der Erfindung wird die Aufgabe gelöst durch ein Verfahren zum Separieren einer Schale aus einem Stapel von Schalen zum Aufnehmen von Lebensmitteln unter Verwendung einer Vorrichtung nach mindestens einem der vorstehenden Ansprüche, bei dem
a) ein Stapel aus mehreren Schalen in einer Halteeinrichtung einer Vorrichtung zum Separieren von einzelnen Schalen aus dem Stapel bereitgestellt ist,
b) der Stapel in einer ersten Phase von mindestens einem im Bereich des Bodens der untersten Schale des Stapels mittels einer Antriebseinrichtung bewegbar gelagerten Boden-Tragelement temporär getragen wird,
c) das mindestens eine Boden-Tragelement aus dem Bereich des Bodens der untersten Schale des Stapels heraus bewegt wird,
d) anschließend die unterste Schale aufgrund einer von dem Stapel weg gerichteten Kraft von dem Stapel nach unten separiert wird,
e) und der Stapel oberhalb von der zu separierenden untersten Schale mittels eines Tragabschnitts der Separiervorrichtung zum temporären Tragen des Stapels temporär getragen wird durch Eingriff des Tragabschnitts an einem Rand der Schale von unten, vorzugsweise dann, wenn das Boden-Tragelement außer Eingriff von dem Boden der zu separierenden untersten Schale ist. (Anspruch 15)

Durch das erfindungsgemäße Verfahren, welches mit der erfindungsgemäßen Separiervorrichtung betreibbar ist, werden im Wesentlichen gleiche Effekte und Vorteile erzielt wie durch die erfindungsgemäße Separiervorrichtung; insoweit wird zur Vermeidung von Wiederholungen vollumfänglich auf die obigen Beschreibungen auch für das erfindungsgemäße Verfahren Bezug genommen.

Vorteilhafte Weiterbildungen der erfindungsgemäßen Separiervorrichtung und auch des erfindungsgemäßen Separierverfahrens ergeben sich des Weiteren aus den nachfolgenden Beschreibungen.

Gemäß einer besonders bevorzugten Ausführungsform wird vorgeschlagen, dass mehrere bewegbar gelagerte Boden-Tragelemente vorgesehen sind, die ausgebildet sind, den Stapel temporär gemeinsam zu tragen und aus dem Bereich des Bodens der untersten Schale herausbewegbar sind. Dadurch, dass mehrere Boden-Tragelemente miteinander im Wesentlichen synchron kooperieren, kann der Boden der untersten Schale von mehreren Boden-Tragelementen angegriffen werden und damit der gesamte Stapel sehr gut ausgerichtet temporär getragen werden. Dies ist vorteilhaft für die Separierung der untersten Schale durch ein infolgedessen gut mögliches sehr passgenaues Einfädeln des Trennelementes oder auch mehrerer Trennelemente, vorzugsweise in einen Spalt zwischen den Rändern der untersten und zweituntersten Schale. So können beispielsweise zwei im Wesentlichen gegenüberliegende Boden-Tragelemente oder auch drei verteilte Boden-Tragelemente oder auch besonders bevorzugt vier Boden-Tragelemente erfindungsgemäß vorgesehen sein.

Erfindungsgemäß ist vorgesehen, dass die Antriebseinrichtung zum Bewegen des Boden-Tragelements eine drehbar gelagerte Welle aufweist und das Boden-Tragelement an der Welle angeordnet und bezogen auf die Drehachse der Welle als radial abstehender Vorsprung ausgebildet ist. Mittels einer solchen drehbar gelagerten Welle und einem entsprechend daran bestfestigten Boden-Tragelement lässt sich Letzteres im vorteilhaften Bewegungsmuster einer Drehbewegung temporär zum Tragen der untersten Schale und insgesamt des darüber liegenden Stapels aus Schalen verwirklichen. Das Boden-Tragelement braucht nicht jeweils individuell beschleunigt oder verzögert werden, sondern kann mit einer einstellbaren im Wesentlichen konstanten oder auch variablen Drehgeschwindigkeit in dem Bereich des Bodens der untersten Schale hinein und aus diesem Bereich auch wieder herausbewegt, herausgedreht werden. Die Welle, oder bevorzugt auch mehrere Wellen mit jeweils mindestens einem daran befestigten Boden-Tragelement lässt sich konstruktiv zuverlässig und gut lagern, beispielsweise mit zwei Lagern und bevorzugt im Wege einer sogenannten fliegenden Lagerung, bei der das Boden-Tragelement also jenseits der Lager an einem vorstehenden Wellenabschnitt befestigt ist.

Eine besonders bevorzugte Weiterbildung oder alternative Ausführungsform der Erfindung sieht vor, dass das Boden-Tragelement an der Welle in mehreren verschiedenen axialen Positionen bezogen auf die Drehachse vorzugsweise fixierbar ist in einem bestimmten Bereich in axialer, und/oder radialer und/oder tangentialer Hinsicht. Besonders bevorzugt ist eine Verschiebbarkeit oder Einstellbarkeit des Boden-Tragelementes in verschiedenen axialen Positionen, also bezogen auf die Drehachse oder Längsachse der Welle. Insbesondere durch diese Einstellbarkeit in axialer Richtung kann das Boden-Tragelement an unterschiedlich dimensionierte Schalen angepasst werden, also beispielsweise Schalen mit verschieden großen vertikalen Abständen zwischen dem Randbereich, welcher regelmäßig flanschartig von der Schale seitlich radial absteht, und dem Bodenbereich der Schale.

Eine bevorzugte Weiterbildung zeichnet sich dadurch aus, dass das Boden-Tragelement mithilfe einer axial verlaufenden Ausnehmung in der Welle in verschiedenen axialen Stellungen fixierbar ist, wobei vorzugsweise die Welle wenigstens abschnittsweise als Hohlwelle ausgebildet ist und/oder das Boden-Tragelement in verschiedenen axialen Stellungen mittels einer Schraube stufenlos feststellbar ist. Eine Ausnehmung, z.B. Nut, Längsnut insbesondere oder auch ein Langloch in einer bevorzugten Hohlwelle erlaubt die Montage von Befestigungsmitteln, beispielsweise Schrauben, Muttern, oder anderer Fixiermittel zum einfachen Festsetzen beziehungsweise auch Lösen des Boden-Tragelements zum Verstellen der Position an der Welle, insbesondere der axialen Position. Die Ausnehmung verläuft also in Richtung der gewünschten Verstellrichtung, insbesondere also in axialer Richtung.

Eine weitere bevorzugte Ausführungsform sieht vor, dass das Boden-Tragelement nach Art eines plattenförmigen Flügels ausgebildet ist und eine Breite aufweist, die geringer ist als der Außendurchmesser der Welle in dem Bereich, in dem das Boden-Tragelement an der Welle befestigt ist. Der Flügel steht vorzugsweise im Wesentlichen in radialer Richtung ab und kann eine an den erfindungsgemäßen Zweck des Tragens des Stapels vorteilhaft angepasste Form aufweisen, beispielsweise eine mit zunehmenden Abstand von der Drehachse jedenfalls teilweise sich nach außen erweiternde Form, nach Art eines sich erweiternden Flügels, und/ oder kreissegmentartig, teilweise in der Ansicht rechtwinklig oder anderweitig vorteilhaft angepasst sein. Die Breite des Flügels, vorzugsweise gemessen oder gesehen in einer Seitenansicht in Richtung auf die Drehachse kann insbesondere im Falle einer bevorzugten Hohlwelle, kleiner sein als der Durchmesser der Welle, insbesondere der Hohlwelle.

Eine weitere bevorzugte Ausführungsform zeichnet sich dadurch aus, dass zwei bis vier Wellen mit jeweils einem daran befestigten Boden-Tragelement an dem Maschinengestell gelagert sind und synchron mittels der Antriebseinrichtung antreibbar sind, sodass zwei bis vier Boden-Tragelemente temporär den Stapel tragen beziehungsweise aus dem Bereich des Bodens der untersten Schale synchron herausbewegt werden, sodass die unterste Schale separierbar ist. Insbesondere vier im Wesentlichen in einem Quadrat oder Rechteck, von oben betrachtet, angeordnete Wellen sind besonders bevorzugt, so dass eine gleichmäßige Tragfunktion durch vier entsprechende Boden-Tragelemente verwirklicht ist, sodass eine besonders vorteilhafte Separierung ermöglicht ist. Auch andere Anordnungen sind erfindungsgemäß denkbar, beispielsweise drei von oben betrachtet in einem Dreieck angeordnete Wellen.

Besonders zweckmäßig ist es, dass die Welle(n) und die Halteeinrichtung so an dem Maschinengestell gelagert sind, dass im Betrieb die Wellen und der Stapel im Wesentlichen senkrecht angeordnet sind. So kann die Gravitation die Separierung der untersten Schale optimal unterstützen und eine optimale Einfädelung des Trennelementes erreicht werden.

Eine weitere bevorzugte Weiterbildung der Erfindung schlägt vor, dass die Welle(n) mittels eines einzigen Antriebs der Antriebseinrichtung angetrieben und mittels eines Getriebes, vorzugsweise mittels eines Zahnriemen- oder Kettengetriebes antreibbar sind. Ein einziger Antrieb erleichtert den konstruktiven Aufwand und sorgt gleichzeitig für eine gute Synchronisierung der Bewegung der Boden-Tragelemente dergestalt, dass sie temporär gleichzeitig mit dem Boden der untersten Schale kooperieren und die Tragfunktion übernehmen und in einer anderen Phase gleichmäßig aus dem Bereich des Bodens der untersten Schale herausbewegt werden, um die unterste Schale nach unten Separieren und von dem Stapel absondern zu können.

Erfindungsgemäß ist das Trennelement der Trenneinrichtung axial beabstandet bezogen auf die Drehachse im Betrieb oberhalb von dem Boden-Tragelement an der Welle angeordnet und so ausgebildet ist, dass es auf
die unterste Schale eine von dem Rest des Stapels weg gerichtete Kraft aufbringt, wenn das Boden-Tragelement temporär die unterste Schale freigibt, um die Trennung der untersten Schale von dem Stapel zu unterstützen. Durch eine solche Ausgestaltung kann eine positive nach unten gerichtete Kraft auf die zu separierende unterste Schale ausgeübt werden, nachdem die Boden-Tragelemente wieder in ihre passive Stellung bewegt worden sind. Gravitation und zusätzliche Kraft kooperieren so effektiv.

Gemäß einer besonders bevorzugten Weiterbildung ist vorgesehen, dass das Trennelement als sich wenigstens teilweise spiralförmig um die äußere Peripherie der Welle erstreckende Spirale zum Aufbringen einer Kraft auf die unterste zu separierende Schale nach unten ausgebildet ist. Durch eine solche sich spiralförmige, radial abstehende Spirale lässt sich in einer bestimmten Zeitphase die zusätzliche Separierkraft, nach unten gerichtet, auf die unterste Schale aufbringen. Vorzugsweise weist das Trennelement einen flachen, spiralförmigen sich axial in Richtung auf das Boden-Tragelement hin erstreckenden Vorsprung auf, der ausgebildet ist, während der Rotation der Welle von oben auf den Rand der zu separierenden Schale eine nach unten gerichtete Kraft aufzubringen. Zweckmäßigerweise ist das Trennelement als Trennblech ausgebildet.

Eine bevorzugte Ausführungsform ist ferner dadurch gekennzeichnet, dass das spiralförmige Trennelement, insbesondere das Trennblech, elastisch verformbar ist und sich in axialer Richtung verschieden lang einstellen lässt. Auf diese Art der elastischen Verformbarkeit kann das spiralförmige Trennelement eingestellt werden für verschieden dimensionierte Schalen, insbesondere Schalen mit verschiedenen axialen Abständen zwischen Rand und Boden.

Besonders bevorzugt ist es, wenn das elastisch verformbare Trennelement mit seinem unteren Endbereich an das vorzugsweise in verschiedenen axialen Stellungen fixierbare Boden- Tragelement gekoppelt ist. Durch eine solche mechanische Kopplung ergibt sich ein Synergieeffekt dahingehend, dass gleichzeitig durch Verstellung des Boden-Tragelementes in axialer Richtung auch das vorzugsweise spiralförmige Trennelement verstellt wird und angepasst wird an den Abstand zwischen Rand und Boden einer Schale. Die Verstellung ist so mit geringem zeitlichem Aufwand zuverlässig möglich.

Eine weitere bevorzugte Ausführungsform sieht vor, dass an der Welle benachbart zu dem Trennelement ein radial abstehender Tragabschnitt zum temporären Tragen des Stapels vorgesehen ist, der ausgebildet ist, den Stapel temporär durch Eingriff an einem Rand der Schale von unten zu tragen, vorzugsweise oder bevorzugt immer dann, wenn das Boden-Tragelement außer Eingriff von dem Boden der zu separierenden untersten Schale ist. Während die Boden-Tragelemente in ihrer passiven Stellung sind und nicht die unterste Schale und damit den gesamten Stapel stützen, bedarf es vorteilhaft einer zusätzlichen Tragfunktion für den gesamten Stapel, welcher bevorzugt durch den einen oder auch zusätzlichen radial abstehenden Tragabschnitt ausgebildet ist. Der Tragabschnitt kann so ausgebildet sein und auch vorzugsweise an der Welle befestigt oder angeordnet sein, dass er dann im wahrsten Sinne zum Tragen des Stapels kommt, wenn das oder die Boden-Tragelemente temporär aus dem Bereich des Bodens der untersten Schale herausbewegt sind.

Die Erfindung ist nachstehend anhand von Ausführungsbeispielen einer erfindungsgemäßen Separiervorrichtung und eines entsprechenden Verfahren unter Bezugnahme auf die Figuren beschrieben. Es zeigen:
- Figur 1:: eine Vorderansicht einer Separiervorrichtung,

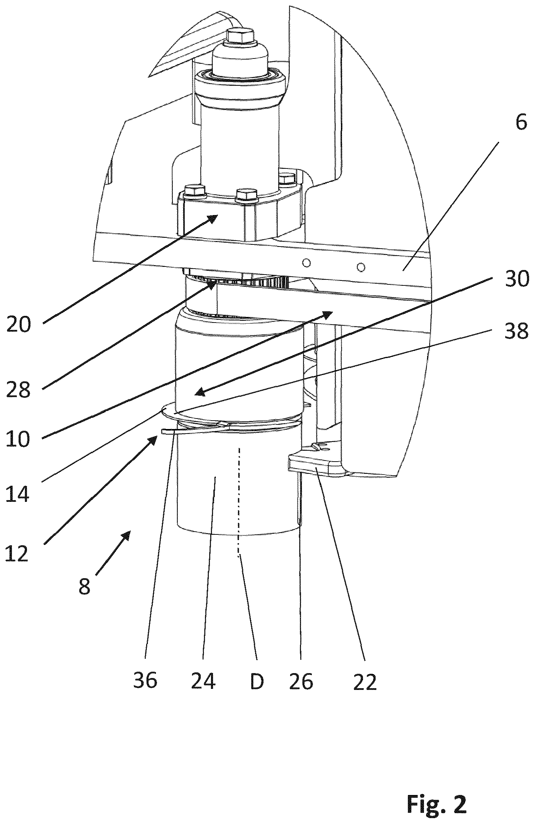

- Figur 2:: eine Detailansicht der Separiervorrichtung gem. Fig.1,

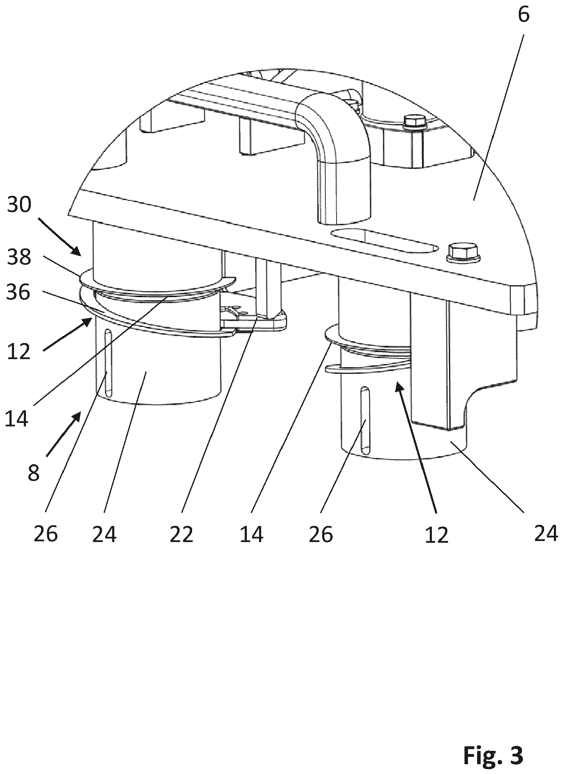

- Figur 3:: eine Detailansicht der Separiervorrichtung gem. Fig.1,
- Figur 4:: eine Vorderansicht der Separiervorrichtung gem. Fig. 1 mit Schalen-Stapel,
- Figur 5:: eine Detailansicht der Separiervorrichtung gem. Fig.1 mit Schalen-Stapel,
- Figur 6:: eine Detailansicht der Separiervorrichtung gem. Fig.1 mit Schalen-Stapel, sowie
- Figur 7:: eine Draufsicht der Separiervorrichtung gem. Fig.1.
Einander entsprechende Teile sind in allen Figuren mit den gleichen Bezugszeichen versehen.

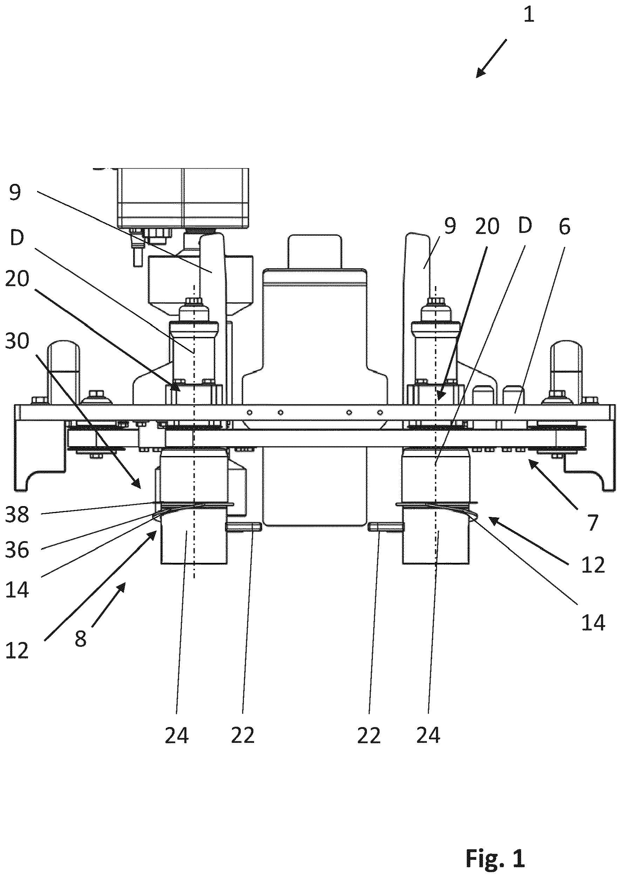

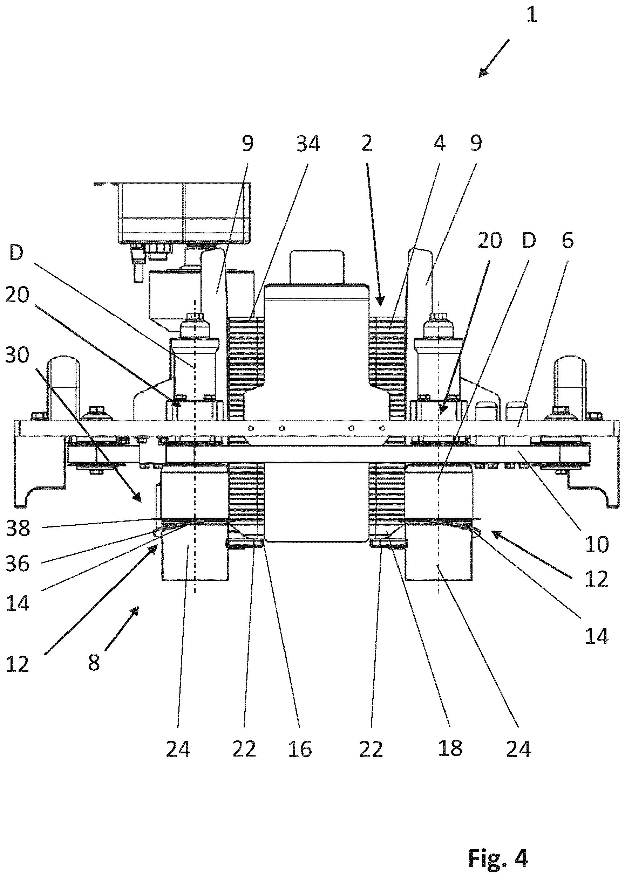

Fig. 1 zeigt eine Vorrichtung 1 zum Separieren von einzelnen Schalen 4 (siehe Figur 4) aus einem Schalen-Stapel 2. Die Vorrichtung 1 weist ein Maschinengestell 6 zum Befestigen der Komponenten oder der wesentlichen Komponenten der Vorrichtung auf, welches als Grundplatte ausgebildet ist. Die Vorrichtung 1 umfasst eine Halteeinrichtung 8 zum Halten des Stapels 2.

Die Halteeinrichtung 8 weist mehrere, im Ausführungsbeispiel vier im Wesentlichen senkrecht relativ zu der Grundplatte und in etwa parallel zu einer Längsachse D mehrerer Wellen 24 verlaufende und im Betrieb vertikal angeordnete Führungen 9 auf, die den Stapel 2 seitlich stützen oder führen, vergleiche insbesondere Figuren 1 und 4.

Das Maschinengestell 6 weist eine Montage-Grundplatte auf, welche eine Vielzahl von Ausnehmungen, Gewinden oder dergleichen zum Anordnen der Komponenten aufweist, und Dient insbesondere der Aufnahme von mehreren Wellen 24, welche Teil einer Antriebseinrichtung 7 zum Bewegen des Boden-Tragelements 22 oder, wie im Ausführungsbeispiel, mehrerer Boden-Tragelemente 22 sind.

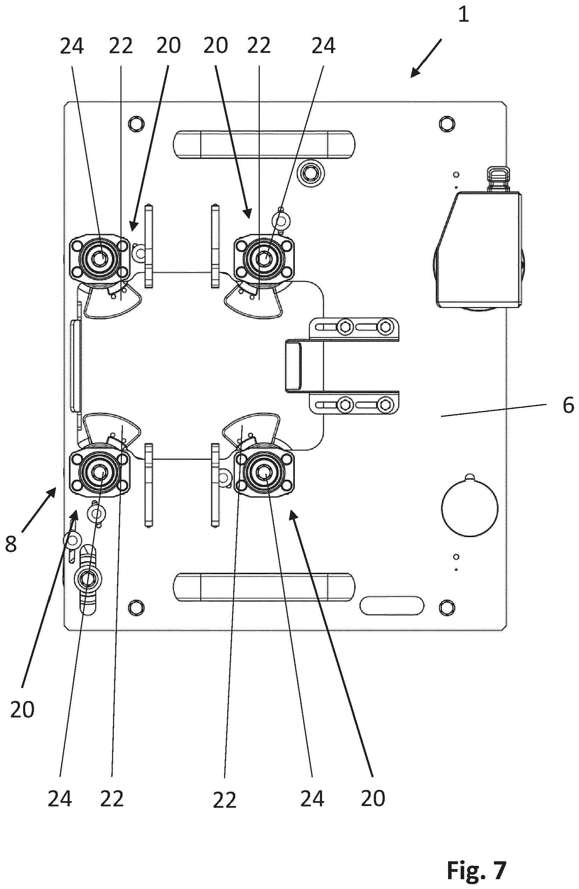

Jede Welle 24 ist fliegend mittels zweier Lagers 20, 21 an der Montage-Grundplatte des Maschinengestells 6 gelagert, und zwar so, dass die jeweiligen Drehachsen oder Längsachse D senkrecht zu der Grundplatte verlaufen. Das Lager 20 ist mittels einer Schraubverbindung an der Grundplatte des Maschinengestells 6 befestigt. Das zweite, nicht erkennbare Lager 21 ist jeweils in einem zylindrischen Rohr 23 angeordnet. Die Welle 24 erstreckt sich von dem oberhalb der Grundplatte angeordneten Teil innerhalb des Rohres 23 und weiter in einen unteren Abschnitt unterhalb der Grundplatte. In dem bevorzugten Ausführungsbeispiel sind vier Wellen 24 an dem Maschinengestell 6 gelagert. Die vier Wellen 24 sind in einer Draufsicht (vergleiche Figur 7) im Rechteck an der Grundplatte des Maschinengestells 6 angeordnet, also in jeder Ecke des Rechtecks eine Welle 24, siehe hierzu auch Fig. 7. Die Wellen 24 sind jedenfalls teilweise, im Ausführungsbeispiel in dem Teil unterhalb der Grundplatte vorzugsweise als Hohlwelle ausgebildet. Zu diesem Zweck kann an der inneren, mittels der Lager 20, 21 gelagerten Welle unterhalb der Grundplatte eine äußere Welle befestigt sein, die in den Figuren dort von außen erkennbar ist. Die Wellen 24 werden mittels eines Zahn-Riemen 10 angetrieben, welcher Teil der Antriebseinrichtung 7 ist, und somit in eine Drehbewegung während des Separiervorganges versetzt. In dem gezeigten Ausführungsbeispiel werden alle vier Wellen 24 gemeinsam mittels eines Antriebs (nicht gezeigt) angetrieben. Jede Welle 24 ist mit einem Zahnrad 28 versehen, mittels dessen die Kraft des Antriebs auf die Welle(n) 24 übertragen wird. Der Zahn-Riemen 10 ist zu diesem Zweck in Eingriff mit den vier Zahnrädern 28. So ist ein Getriebe zur Übertragung der Leistung von dem Antrieb auf die Antriebseinrichtung 7 und damit zur Bewegung des Boden-Tagelements 22 gebildet.

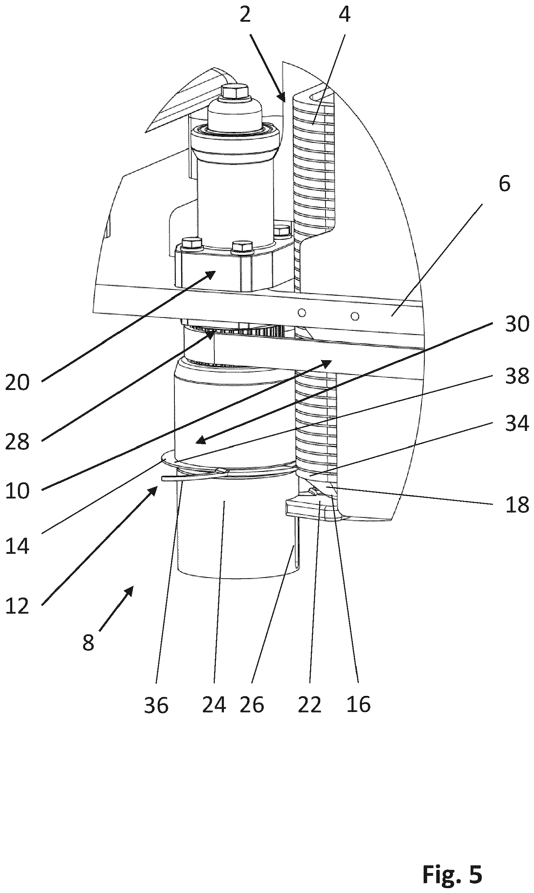

Die Halteeinrichtung 8 zum Halten des Stapels 2 weist mindestens ein, im Ausführungsbeispiel vier bewegbare Boden-Tragelemente 22 auf, welche zum Tragen des Stapels 2 eingerichtet ist. Diese Funktion erfüllt das oder die Boden-Tragelement(e) 22 zumindest temporär, insbesondere während des Separiervorganges. Das Tragen des Stapels 2 ist in den Figuren 4-6 zu erkennen. Das Boden-Tragelement 22 ist als Vorsprung an der Welle 24 ausgebildet. Vorzugsweise ist das Boden-Tragelement 22 senkrecht zu der Drehachse D der Welle 24 an der Mantelfläche der Welle 24 angeordnet. Das Boden-Tragelement 22 weist in diesem Ausführungsbeispiel eine plattenförmige Struktur auf, wobei sich die Form der Platte trapezförmig von der Welle 24 ausgehend erstreckt, mit der breiten Seite an der von der Welle 24 abgewandten Seite. Die Form des Boden-Tragelementes 22 ist insbesondere auch in Figur 7 zu erkennen.

Die Figuren 4-6 zeigen die Vorrichtung 1 mit einem Stapel 2 aus einer Vielzahl von Schalen 4. Der Stapel 2 ist in der Vorrichtung 1 senkrecht zu der Grundplatte des Maschinengestells 6 bzw. parallel zu den Drehachsen D der Wellen 24 angeordnet. Die Halteeinrichtung 8 trägt den Stapel 2 mittels der Boden-Tragelemente 22 von unten. D. h., dass das Boden-Tragelement 22 beim Tragen des Stapels 2 in Kontakt mit dem Boden 16 der untersten Schale 18 steht und - vertikale - Gewichtskräfte des Stapels 2 aufnimmt. In diesem Ausführungsbeispiel ist jeweils ein Boden-Tragelement 22 an jeweils einer der vier Wellen 24 drehbar beweglich angeordnet. Durch die Anordnung der Wellen 24 im Rechteck auf der Grundplatte sind die Boden-Tragelemente 22 ebenfalls im Rechteck angeordnet. Die Boden-Tragelemente 22 sind bevorzugt jeweils auf gleicher Höhe an den Wellen 24 angeordnet. Somit sind die Boden-Tragelemente 22 im gezeigten Ausführungsbeispiel dafür geeignet, eine im wesentlichen rechteckförmige Schale zu halten. Hierbei nimmt jeweils ein Boden-Tragelement 22 jeweils einen Eckbereich des Bodens 16 der untersten Schale 18 auf, sodass der Stapel 2 von allen Boden-Tragelementen 22 gleichmäßig gehalten wird. Für Schalen 4 mit anderen Geometrien ist entweder die Wellenanordnung auf der Grundplatte anzupassen oder die Form der Boden-Tragelemente 22, sodass der Boden 16 der Schale 4 gleichförmig und bevorzugt waagerecht in der Vorrichtung 1 gehalten wird. Die Boden-Tragelemente 22 sind so drehbeweglich ausgebildet sein, dass sie temporär mit dem Boden der untersten Schale 4 eines Stapels in Kontakt kommen, um den Stapel 2 temporär von unten zu tragen. In nicht dargestellter Weise könnte das eine oder könnten mehrere Boden-Tragelemente 22 statt drehbeweglich auch translatorisch beweglich ausgebildet sein, um temporär mit dem Boden der untersten Schale 4 eines Stapels in Kontakt zu kommen, um den Stapel 2 temporär von unten zu tragen.

Die Vorrichtung 1 umfasst ferner eine Trenneinrichtung 12 zum Separieren einzelner Schalen 4 aus dem Stapel 2, insbesondere der jeweils untersten Schale 4 des Stapels 2. Die Trenneinrichtung 12 weist zu diesem Zweck ein bewegbares Trennelement 14 auf, welches zwischen zwei Schalen 4, insbesondere die unterste Schale 4 und die zweitunterste Schale 4 zwischen deren umlaufende Randbereiche bewegt, gewissermaßen eingefädelt werden kann. Das Trennelement 14 ist als Spirale 30 ausgebildet und ebenfalls mithilfe der Welle 24 drehbar um die Drehachse D gelagert. Das Trennelement 14 erstreckt sich senkrecht zu der Drehachse D der Welle 24 an der Mantelfläche der Welle 24, im Ausführungsbeispiel im Bereich des Abschnitts der Welle 24, die als Hohlwelle ausgebildet ist. Das Trennelement 14 ist bandförmig ausgebildet und weist eine Dicke auf, die gleich oder kleiner ist als ein axialer Abstand zwischen zwei Schalenrändern 34 im Stapel 2. Hierdurch kann das Trennelement 14 während des separieren Vorganges zwischen zwei Schalen 4, insbesondere zwei Schalenränder 34, eingreifen.

Die Spirale 30 ist spiralförmig um die Welle 24 angeordnet. Ausgehend von dem Boden-Tragelement 22 windet sich die Spirale 30 mit einer vorzugsweise konstanten Steigung um die Mantelfläche der Welle 24 herum. Die Spirale 30 ist aus einem solchen Material wie beispielsweise und vorzugsweise Metall oder Kunststoff und so dimensioniert, dass sie elastisch verformbar ist, insbesondere in Richtung Ihrer axialen Erstreckung in Richtung der Drehachse D. Vorzugsweise weist die Spirale 30 eine erste Teil-Windung 36 sowie eine zweite Teil-Windung 38 auf. Die erste Teil-Windung 36 weist eine vorzugsweise konstante Steigung auf und verläuft ausgehend von dem Boden-Tragelement 22 an der Mantelfläche der Welle 24 mit einer nicht vollständigen oder vollständigen Umrundung der Welle 24 in die zweite Teil-Windung 38 über. Die Spirale 30 endet mit der zweiten Teil-Windung 38 mit einem teilweise, vorzugsweise vollständig, um die Welle 24 umlaufenden Ring, der ohne eine Steigung verläuft. Das Trennelement 14 ist dazu eingerichtet, mit der untersten Schale 18 in dessen Randbereich von oben in Eingriff zu kommen, insbesondere greift das Trennelement 14 in den Stapel 2 zwischen die unterste Schale 18 und die darüber liegende Schale 4. Mittels des Trennelements 14 kann durch den Eingriff auf unterste, die zu separierende Schale 4 von oben eine Kraft nach unten aufgebracht werden, um die unterste Schale 4 von dem darüber befindlichen Rest-Stapel 2 nach unten zu separieren. In diesem Moment des Separierens sind die Boden-Tragelemente 22 nicht in der Bewegungsbahn der untersten Schale 4, sondern aus dieser heraus bewegt in eine passive Stellung.

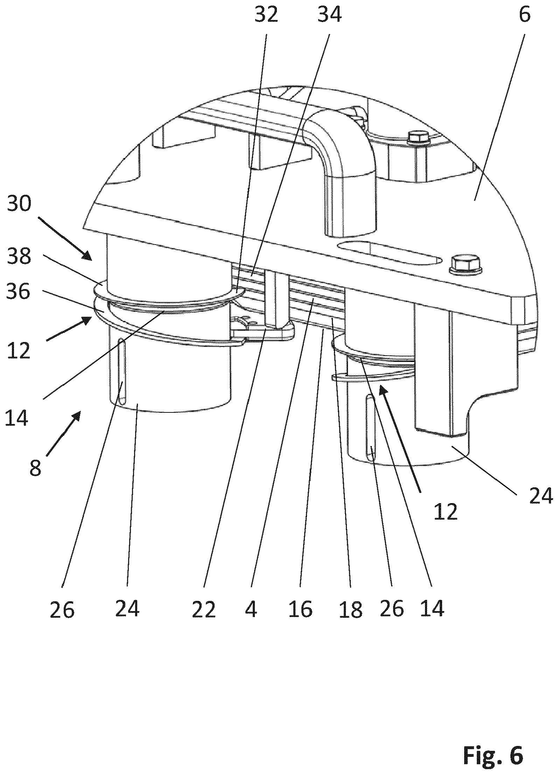

Die Boden-Tragelemente 22 sind insbesondere auch in axialer Richtung, also Richtung der Drehachse D bewegbar an der Welle 24 gelagert und in verschiedenen axialen Position fixierbar, siehe hierzu insbesondere Figur 6. Hierfür ist eine Ausnehmung 26 in der Welle, insbesondere der Hohl-Welle 24 vorgesehen. Diese Ausnehmung 26 ist als Langloch in der Welle 24 ausgebildet. Das Langloch ist durchgehend in der Welle 24 ausgebildet. Mithilfe der Ausnehmung 26 ist das Boden-Tragelement 22 in seiner Höhe verstellbar, insbesondere in Richtung einer Achse parallel zu der Drehachse D der Welle 24. In diesem Ausführungsbeispiel erfolgt die Fixierung des Boden-Tragelementes 22 mittels einer Schraubverbindung an der Ausnehmung 26 der Welle 24. Somit ist die Position des Boden-Tragelementes 22 in der Höhe stufenlos einstellbar. Hierdurch wird der Abstand zwischen dem Trennelement 14, im Ausführungsbeispiel also der der Spirale 30, insbesondere der zweiten Teil-Windung 38 der Spirale 30, und dem Boden-Tragelement 22 einstellbar. Dies ermöglicht den Einsatz der Vorrichtung 1 für Schalen 4 mit unterschiedlich hohem Rand. Damit der Übergang von dem Boden-Trageelement 22 kontinuierlich in die erste Teil-Windung 36 der Spirale 30 verläuft, ist das Trennelement 14, insbesondere die erste Teil-Windung 36, elastisch verformbar, wie oben auch beschrieben. Die zweite Teil-Windung 38 ist vorzugsweise in seiner Position an der Mantelfläche der Welle 24 fixiert.

Die zweite, obere Teil-Windung 38 der Spirale 30 ist temporär zum Tragen des Stapels 2 eingerichtet und bildet somit einen Tragabschnitt 32. Zunächst trägt in einer Phase während des Betriebs das Boden-Tragelement 22 temporär den gesamten Stapel 2. Hierfür liegt der Boden 16 der untersten Schale 18 auf der Oberseite des Boden-Tragelementes 22 auf. Wenn die Welle 24 angetrieben wird, bewegt sich das Boden-Tragelement 22 von dem Stapel 2 weg. Hierdurch wird die Verbindung oder der Kontakt des Boden-Tragelementes 22 mit dem Boden 16 der untersten Schale 18 gelöst. Gleichzeitig gelangt bzw. befindet sich das Trennelement 14, insbesondere die zweite Teil-Windung 38 in der Position zwischen der Oberseite des Randes 34 der untersten Schale 18 und der Unterseite des Randes 34 der darüber liegenden Schale 4. Sobald sich das Boden-Tragelement 22 außer Kontakt des Stapels 2 befindet, trägt der Tragabschnitt 32 (Fig. 6) der zweiten Teil-Windung 38 des Trennelementes 14 den Stapel 2 über der untersten Schale 18. Gleichzeitig bewegt sich mit der Drehung der Welle 24 die erste Teil-Windung 36 des Trennelementes 14 auf den Stapel zu, sodass die unterste Schale 18 durch die Führung an der ersten Teil-Windung 36 mit abfallender Steigung von dem Stapel 2 gelöst und mittels einer aufgebrachten Kraft nach unten abtransportiert wird.

Im Betrieb wird also folgender Ablauf bzw. folgendes Verfahren angewandt: Verfahren zum Separieren einer Schale 4 aus einem Stapel 2 von Schalen 4 zum Aufnehmen von Lebensmitteln unter Verwendung einer zuvor beschriebenen Vorrichtung 1, bei dem
a) ein Stapel 2 aus mehreren Schalen 4 in einer Halteeinrichtung 8 der Vorrichtung 1 bereitgestellt ist,
b) der Stapel 2 in einer ersten Phase von mindestens einem im Bereich des Bodens 16 der untersten Schale 18 des Stapels 2 mittels einer Antriebseinrichtung bewegbar gelagerten Boden-Tragelement 22 temporär getragen wird,
c) das mindestens eine Boden-Tragelement 22 aus dem Bereich des Bodens der untersten Schale 18 des Stapels 2 heraus bewegt wird,
d) anschließend die unterste Schale 18 aufgrund einer von dem Stapel 2 weg gerichteten Kraft von dem Stapel 2 nach unten separiert wird,
e) und der Stapel 2 oberhalb von der zu separierenden untersten Schale 18 mittels eines Tragabschnitts 32 der Separiervorrichtung 1 zum temporären Tragen des Stapels temporär getragen wird durch Eingriff des Tragabschnitts 32 an einem Rand der Schale 34 von unten, vorzugsweise dann, wenn das Boden-Tragelement 22 außer Eingriff von dem Boden 16 der zu separierenden untersten Schale 18 ist

### Bezugszeichenliste:

- 1: Vorrichtung
- 2: Stapel
- 4: Schale
- 6: Maschinengestell
- 7: Antriebseinrichtung
- 8: Halteeinrichtung
- 9: Führungen
- 10: Zahn-Riemen
- 12: Trenneinrichtung
- 14: Trennelement
- 16: Boden der Schale
- 18: unterste Schale
- 20: Lager
- 21: Lager
- 22: Boden-Tragelement
- 24: Welle
- 26: Ausnehmung
- 28: Zahnrad
- 30: Spirale
- 32: Tragabschnitt
- 34: Rand der Schale
- 36: erste Teilwindung
- 38: zweite Teilwindung

- D: Drehachse, Längsachse

## Patentansprüche

1. Vorrichtung (1) zum Separieren von einzelnen Schalen (4) aus einem Stapel (2) mehrerer Schalen (4) zum Aufnehmen von Lebensmitteln, mit
einem Maschinengestell (6) zum Befestigen von Komponenten der Vorrichtung (1),
einer Halteeinrichtung (8) zum Halten des Stapels (2), einer Trenneinrichtung (12) zum Separieren einzelner Schalen (4) aus dem Stapel (2), welche ein Trennelement (14) aufweist, das ausgebildet ist, um mit der jeweils untersten Schale (18) des Stapels (2) in Eingriff zu kommen,
wobei die Halteeinrichtung (8) mindestens ein im Bereich des Bodens (16) der untersten Schale (18) des Stapels (2) mittels einer Antriebseinrichtung (7) bewegbar gelagertes Boden-Tragelement (22) zum temporären Tragen des Stapels (2) aufweist, welches so ausgebildet ist, dass es temporär den Stapel (2) von unten trägt und so aus dem Bereich des Bodens (16) der untersten Schale (18) wegbewegt werden kann, dass die unterste Schale (18) in Richtung nach unten von dem Stapel (2) separierbar ist, während der Stapel ohne die unterste Schale (18) in der Halteeinrichtung (8) verbleibt, und
wobei eine Antriebseinrichtung (7) zum Bewegen des Boden-Tragelements vorgesehen ist, die zum Bewegen des Boden-Tragelements (22) eine drehbar gelagerte Welle (24) aufweist und das Boden-Tragelement (22) an der Welle (24) angeordnet und bezogen auf die Drehachse der Welle (24) als radial abstehender Vorsprung ausgebildet ist,
**dadurch gekennzeichnet, dass** das Trennelement (14) der Trenneinrichtung (12) axial beabstandet bezogen auf die Drehachse im Betrieb oberhalb von dem Boden-Tragelement (22) an der Welle (24) angeordnet ist und so ausgebildet ist, dass es auf die unterste Schale (18) eine von dem Rest des Stapels (2) weg gerichtete Kraft aufbringt, wenn das Boden-Tragelement (22) temporär die unterste Schale (18) freigibt, um die Trennung der untersten Schale (18) von dem Stapel (2) zu unterstützen.

2. Separiervorrichtung (1) nach Anspruch 1,
**dadurch gekennzeichnet, dass** mehrere bewegbar gelagerte Boden-Tragelemente (22) vorgesehen sind, die ausgebildet sind, den Stapel (2) temporär gemeinsam zu tragen und aus dem Bereich des Bodens (16) der untersten Schale (18) herausbewegbar sind.

3. Separiervorrichtung (1) nach Anspruch 1 oder 2,
**dadurch gekennzeichnet, dass** das Boden-Tragelement (22) an der Welle (24) in mehreren verschiedenen axialen Positionen bezogen auf die Drehachse vorzugsweise fixierbar ist in einem bestimmten Bereich in axialer, und/oder radialer und/oder tangentialer Hinsicht.

4. Separiervorrichtung (1) nach Anspruch 3,
**dadurch gekennzeichnet, dass** das Boden-Tragelement (22) mithilfe einer axial verlaufenden Ausnehmung (26) in der Welle (24) in verschiedenen axialen Stellungen fixierbar ist, wobei vorzugsweise die Welle (24) wenigstens abschnittsweise als Hohlwelle ausgebildet ist und/oder das Boden-Tragelement (22) in verschiedenen axialen Stellungen mittels einer Schraube stufenlos feststellbar ist.

5. Separiervorrichtung (1) nach mindestens einem der vorstehenden Ansprüche, **dadurch gekennzeichnet, dass** das Boden-Tragelement (22) nach Art eines plattenförmigen Flügels ausgebildet ist und eine Breite aufweist, die geringer ist als der Außendurchmesser der Welle (24) in dem Bereich, in dem das Boden-Tragelement (22) an der Welle (24) befestigt ist.

6. Separiervorrichtung (1) nach mindestens einem der vorstehenden Ansprüche, **dadurch gekennzeichnet, dass** zwei bis vier Wellen (24) mit jeweils einem daran befestigten Boden-Tragelement (22) an dem Maschinengestell (6) gelagert sind und synchron mittels der Antriebseinrichtung antreibbar sind, sodass zwei bis vier Boden-Tragelemente (22) temporär den Stapel (2) tragen beziehungsweise aus dem Bereich des Bodens (16) der untersten Schale (18) synchron herausbewegt werden, sodass die unterste Schale (18) separierbar ist.

7. Separiervorrichtung (1) nach mindestens einem der vorstehenden Ansprüche, **dadurch gekennzeichnet, dass** die Welle(n) (24) und die Halteeinrichtung (8) so an dem Maschinengestell (6) gelagert sind, dass im Betrieb die Wellen (24) und der Stapel (2) im Wesentlichen senkrecht angeordnet sind.

8. Separiervorrichtung (1) nach mindestens einem der vorstehenden Ansprüche, **dadurch gekennzeichnet, dass** die Welle(n) (24) mittels eines einzigen Antriebs der Antriebseinrichtung angetrieben und mittels eines Getriebes (28), vorzugsweise mittels eines Zahnriemen- oder Kettengetriebes antreibbar sind.

9. Separiervorrichtung (1) nach mindestens einem der vorstehenden Ansprüche,
**dadurch gekennzeichnet, dass** das Trennelement (14) als sich wenigstens teilweise spiralförmig um die äußere Peripherie der Welle (24) erstreckende Spirale (30) zum Aufbringen einer Kraft auf die unterste zu separierende Schale (18) nach unten ausgebildet ist.

10. Separiervorrichtung (1) nach mindestens einem der vorstehenden Ansprüche, **dadurch gekennzeichnet, dass** das Trennelement (14) einen flachen, spiralförmigen sich axial in Richtung auf das Boden-Tragelement (22) hin erstreckenden Vorsprung aufweist, der ausgebildet ist, während der Rotation der Welle (24) von oben auf den Rand (34) der zu separierenden Schale (18) eine nach unten gerichtete Kraft aufzubringen.

11. Separiervorrichtung (1) nach mindestens einem der vorstehenden Ansprüche, **dadurch gekennzeichnet, dass** das Trennelement (14) als Trennblech ausgebildet ist.

12. Separiervorrichtung (1) nach Anspruch 10,
**dadurch gekennzeichnet, dass** das spiralförmige Trennelement (14), insbesondere das Trennblech, elastisch verformbar ist und sich in axialer Richtung verschieden lang einstellen lässt.

13. Separiervorrichtung (1) nach Anspruch 12,
**dadurch gekennzeichnet, dass** das elastisch verformbare Trennelement (14) mit seinem unteren Endbereich an das vorzugsweise in verschiedenen axialen Stellungen fixierbare Boden-Tragelement (22) gekoppelt ist.

14. Separiervorrichtung (1) nach mindestens einem der vorstehenden Ansprüche,
**dadurch gekennzeichnet, dass** an der Welle (24) benachbart zu dem Trennelement (14) ein radial abstehender Tragabschnitt (32) zum temporären Tragen des Stapels (2) vorgesehen ist, der ausgebildet ist, den Stapel (2) temporär durch Eingriff an einem Rand der Schale (34) von unten zu tragen, vorzugsweise dann, wenn das Boden-Tragelement (22) außer Eingriff von dem Boden (16) der zu separierenden untersten Schale (18) ist.

15. Verfahren zum Separieren einer Schale (4) aus einem Stapel (2) von Schalen (4) zum Aufnehmen von Lebensmitteln unter Verwendung einer Vorrichtung (1) nach mindestens einem der vorstehenden Ansprüche, bei dem
a) ein Stapel (2) aus mehreren Schalen (4) in einer Halteeinrichtung (8) einer Vorrichtung (1) zum Separieren von einzelnen Schalen (4) aus dem Stapel (2) bereitgestellt ist,
b) der Stapel (2) in einer ersten Phase von mindestens einem im Bereich des Bodens (16) der untersten Schale (18) des Stapels (2) mittels einer Antriebseinrichtung bewegbar gelagerten Boden-Tragelement (22) temporär getragen wird,
c) das mindestens eine Boden-Tragelement (22) aus dem Bereich des Bodens der untersten Schale (18) des Stapels (2) heraus bewegt wird,
d) anschließend die unterste Schale (18) aufgrund einer von dem Stapel (2) weg gerichteten Kraft von dem Stapel (2) nach unten separiert wird,
e) und der Stapel (2) oberhalb von der zu separierenden untersten Schale (18) mittels eines Tragabschnitts (32) der Separiervorrichtung (1) zum temporären Tragen des Stapels temporär getragen wird durch Eingriff des Tragabschnitts (32) an einem Rand der Schale (34) von unten, vorzugsweise dann, wenn das Boden-Tragelement (22) außer Eingriff von dem Boden (16) der zu separierenden untersten Schale (18) ist.

## Claims

1. Apparatus (1) for separating individual bowls (4) from a stack (2) of a plurality of bowls (4) for receiving foodstuffs, comprising
a machine frame (6) for fixing components of the apparatus (1), a holding device (8) for holding the stack (2), a separating device (12) for separating individual bowls (4) from the stack (2), having a separating element (14) adapted to come into engagement with the respective lowermost bowl (18) of the stack (2),
wherein the holding device (8) has at least one bottom carrier element (22) for temporarily carrying the stack (2), that is mounted in the region of the bottom (16) of the lowermost bowl (18) of the stack (2) moveably by means of a drive device (7) and which is so adapted that it temporarily carries the stack (2) from below and can be so moved away from the region of the bottom (16) of the lowermost bowl (18) that the lowermost bowl (18) can be separated from the stack in a downward direction while the stack without the lowermost bowl (18) remains in the holding device (8), and
wherein a drive device (7) is provided for moving the bottom carrier element, the drive device (7) having a rotatably mounted shaft (24) for moving the bottom carrier element (22) and being arranged at the shaft (24) and is in the form of a radially protruding projection with respect to the axis of rotation of the shaft (24).
**characterised in that** the separating element (14) of the separating device (12) is arranged axially spaced with respect to the axis of rotation in operation above the bottom carrier element (22) on the shaft (24) and is of such a configuration that it applies to the lowermost bowl (18) a force directed away from the remainder of the stack (2) when the bottom carrier element (22) temporarily releases the lowermost bowl (18) to support separation of the lowermost bowl (18) from the stack (2).

2. A separating apparatus (1) according to claim 1,
**characterised in that** there are provided a plurality of moveably mounted bottom carrier elements (22) which are adapted to temporarily jointly carry the stack (2) and are moveable out of the region of the bottom (16) of the lowermost bowl (18).

3. A separating apparatus (1) according to claim 1 or 2,
**characterised in that** the bottom carrier element (22) is preferably fixable to the shaft in a plurality of different axial positions with respect to the axis of rotation in a given region in an axial and/or radial and/or tangential respect.

4. A separating apparatus (1) according to claim 3,
**characterised in that** the bottom carrier element (22) is fixable in various axial positions by means of an axiallly extending recess (26) in the shaft (24), wherein preferably the shaft (24) is at least portion-wise in the form of a hollow shaft and/or the bottom carrier element (22) can be steplessly secured in various axial positions by means of a screw.

5. A separating apparatus (1) according to at least one of the preceding claims,
**characterised in that** the bottom carrier element (22) is configured in the manner of a plate-shaped wing and is of a width less than the outside diameter of the shaft (24) in the region in which the bottom carrier element (22) is fixed to the shaft (24).

6. A separating apparatus (1) according to at least one of the preceding claims,
**characterised in that** two to four shafts (24) each with a bottom carrier element (22) fixed thereto are mounted to the machine frame (6) and are drivable synchronously by means of the drive device so that two to four bottom carrier elements (22) temporarily carry the stack (2) or are synchronously moved out of the region of the bottom (16) of the lowermost stack (2) so that the lowermost bowl (18) can be separated.

7. A separating apparatus (1) according to at least one of the preceding claims,
**characterised in that** the shaft or shafts (24) and the holding device (8) are so mounted to the machine frame (6) that in operation the shafts (24) and the stack (2) are arranged substantially vertically.

8. A separating apparatus (1) according to at least one of the preceding claims,
**characterised in that** the shaft or shafts (24) are driven by means of a single drive of the drive device and are drivable by means of a transmission (28), preferably by means of a toothed belt or chain transmission.

9. A separating apparatus (1) according to at least one of the preceding claims,
**characterised in that** the separating element (14) is in the form of a spiral (30) extending at least portion-wise in a spiral configuration around the outer periphery of the shaft (24) for applying a force to the lowermost bowl (18) to be separated downwardly.

10. A separating apparatus (1) according to at least one of the preceding claims,
**characterised in that** the separating element (14) has a flat spiral-shaped projection which extends axially in a direction towards the bottom carrier element (22) and which is adapted during rotation of the shaft (24) to apply a downwardly directed force from above to the rim (34) of the bowl (18) to be separated.

11. A separating apparatus (1) according to at least one of the preceding claims,
**characterised in that** the separating element (14) is in the form of a separating plate member.

12. A separating apparatus (1) according to claim 10,
**characterised in that** the spiral-shaped separating element (14), in particular the separating plate member, is elastically deformable and can be set to different lengths in the axial direction.

13. A separating apparatus (1) according to claim 12,
**characterised in that** the elastically deformable separating element (14) is coupled with its lower end region to the bottom carrier element (22) which is preferably fixable in different axial positions.

14. A separating apparatus (1) according to at least one of the preceding claims,
**characterised in that** provided on the shaft (24) in adjacent relationship with the separating element (14) is a radially projecting carrier portion (32) for temporarily carrying the stack (2), which is adapted to carry the stack (2) temporarily by engagement at a rim of the bowl (34) from below, preferably when the bottom carrier element (22) is out of engagement from the bottom (16) of the lowermost bowl (18) to be separated.

15. A method of separating a bowl (4) from a stack (2) of bowls (4) for receiving foodstuffs, preferably using an apparatus (1) according to at least one of the preceding claims, wherein
a) a stack (2) comprising a plurality of bowls (4) is provided in a holding device (8) of an apparatus (1) for separating individual bowls (4) from the stack (2),
b) the stack (2) in a first phase is temporarily carried by at least one bottom carrier element (22) mounted in the region of the bottom (16) of the lowermost bowl (18) of the stack (2) moveably by means of a drive device,
c) the at least one bottom carrier element (22) is moved out of the region of the bottom of the lowermost bowl (18) of the stack (2),
d) then the lowermost bowl (18) is separated downwardly from the stack (2) by virtue of a force directed away from the stack (2), and
e) the stack (2) is temporarily carried above the lowermost bowl (18) to be separated by means of a carrier portion (32) of the separating apparatus (1) for temporarily carrying the stack by engagement of the carrier portion (32) at a rim of the bowl (34) from below, preferably when the bottom carrier element (22) is out of engagement from the bottom (16) of the lowermost bowl (18) to be separated.

## Revendications

1. Dispositif (1) pour séparer divers plateaux (4) d'une pile (2) de plusieurs plateaux (4) destinés à recevoir des produits alimentaires, avec
un bâti de machine (6) destiné à fixer des composants du dispositif (1),
un système de maintien (8) destiné à maintenir la pile (2), un système de séparation (12) destiné à séparer divers plateaux (4) de la pile (2), lequel présente un élément de séparation (14) qui est réalisé pour venir en prise avec le plateau (18) respectivement le plus bas de la pile (2),
dans lequel le système de maintien (8) présente au moins un élément de support de fond (22) monté de manière à pouvoir être déplacé au moyen d'un système d'entraînement (7) dans la zone du fond (16) du plateau (18) le plus bas de la pile (2) pour supporter de manière temporaire la pile (2), lequel est réalisé de telle sorte qu'il supporte depuis le bas temporairement la pile (2) et peut être éloigné ainsi de la zone du fond (16) du plateau (18) le plus bas, que le plateau (18) le plus bas peut être séparé de la pile (2) en direction du bas tandis que la pile sans le plateau le plus bas (18) reste dans le système de maintien (8), et
dans lequel le système d'entraînement (7) est prévu pour déplacer l'élément de support de fond, qui présente, pour déplacer l'élément de support de fond (22), un arbre (24) monté de manière à pouvoir tourner et l'élément de support de fond (22) est disposé sur l'arbre (24) et est réalisé en tant que partie faisant saillie dépassant radialement par rapport à l'axe de rotation de l'arbre (24),
**caractérisé en ce que** l'élément de séparation (14) du système de séparation (12) est disposé en fonctionnement au-dessus de l'élément de support de fond (22) sur l'arbre (24) de manière espacée axialement par rapport à l'axe de rotation et est réalisé de telle sorte qu'il applique, sur le plateau (18) le plus bas, une force dirigée de manière à s'éloigner du reste de la pile (2) quand l'élément de support de fond (22) libère temporairement le plateau (18) le plus bas pour soutenir la séparation du plateau (18) le plus basa de la pile (2) .

2. Dispositif de séparation (1) selon la revendication 1,
**caractérisé en ce que** sont prévus plusieurs éléments de support de fond (22) montés de manière à pouvoir être déplacés, qui sont réalisés pour supporter conjointement de manière temporaire la pile (2) et qui peuvent être déplacés hors de la zone du fond (16) du plateau (18) le plus bas.

3. Dispositif de séparation (1) selon la revendication 1 ou 2,
**caractérisé en ce que** l'élément de support de fond (22) peut être bloqué sur l'arbre (24) dans plusieurs différentes positions axiales par rapport à l'axe de rotation, dans une zone donnée dans un plan axial et/ou radial et/ou tangentiel.

4. Dispositif de séparation (1) selon la revendication 3,
**caractérisé en ce que** l'élément de support de fond (22) peut être bloqué dans différentes positions axiales dans l'arbre (24) à l'aide d'un évidement (26) s'étendant de manière axiale, dans lequel de préférence l'arbre (24) est réalisé au moins par endroits en tant qu'arbre creux et/ou l'élément de support de fond (22) peut être immobilisé de manière continue dans différentes positions axiales au moyen d'une vis.

5. Dispositif de séparation (1) selon au moins l'une quelconque des revendications précédentes,
**caractérisé en ce que** l'élément de support de fond (22) est réalisé à la manière d'une ailette en forme de plaque et présente une largeur qui est inférieure au diamètre extérieur de l'arbre (24) dans la zone dans laquelle l'élément de support de fond (22) est fixé sur l'arbre (24).

6. Dispositif de séparation (1) selon au moins l'une quelconque des revendications précédentes,
**caractérisé en ce que** deux à quatre arbres (24) sont montés sur le bâti de machine (6) avec respectivement un élément de support de fond (22) fixé sur ceux-ci et peuvent être entraînés de manière synchrone au moyen du système d'entraînement si bien que deux à quatre éléments de support de fond (22) supportent temporairement la pile (2) ou sont déplacés de manière synchrone hors de la zone du fond (16) du plateau (18) le plus bas si bien que le plateau (18) le plus bas peut être séparé.

7. Dispositif de séparation (1) selon au moins l'une quelconque des revendications précédentes,
**caractérisé en ce que** l'arbre/les arbres (24) et le système de maintien (8) sont montés de telle sorte sur le bâti de machine (6) qu'en fonctionnement les arbres (24) et la pile (2) sont disposés de manière sensiblement perpendiculaire.

8. Dispositif de séparation (1) selon au moins l'une quelconque des revendications précédentes,
**caractérisé en ce que** l'arbre/les arbres (24) sont entraînés au moyen d'un unique entraînement du système d'entraînement et peuvent être entraînés au moyen d'une transmission (28), de préférence au moyen d'une transmission à courroie ou d'une transmission à chaîne.

9. Dispositif de séparation (1) selon au moins l'une quelconque des revendications précédentes,
**caractérisé en ce que** l'élément de séparation (14) est réalisé en tant que spirale (30) s'étendant au moins en partie en forme de spirale autour de la périphérie extérieure de l'arbre (24) pour appliquer une force sur le plateau (18) le plus bas à séparer vers le bas.

10. Dispositif de séparation (1) selon au moins l'une quelconque des revendications précédentes,
**caractérisé en ce que** l'élément de séparation (14) présente une partie faisant saillie plate en forme de spirale s'étendant axialement en direction de l'élément de support de fond (22), qui est réalisée pour appliquer une force dirigée vers le bas depuis le haut sur le bord (34) du plateau (18) à séparer au cours de la rotation de l'arbre (24).

11. Dispositif de séparation (1) selon au moins l'une quelconque des revendications précédentes,
**caractérisé en ce que** l'élément de séparation (14) est réalisé en tant que tôle de séparation.

12. Dispositif de séparation (1) selon la revendication 10,
**caractérisé en ce que** l'élément de séparation (14) en forme de spirale, en particulier la tôle de séparation, peut être déformé élastiquement et peut être réglé avec une longueur différente dans la direction axiale.

13. Dispositif de séparation (1) selon la revendication 12,
**caractérisé en ce que** l'élément de séparation (14) élastiquement déformable est couplé par sa zone d'extrémité inférieure à l'élément de support de fond (22) pouvant être bloqué de préférence dans différentes positions axiales.

14. Dispositif de séparation (1) selon au moins l'une quelconque des revendications précédentes,
**caractérisé en ce qu'**est prévue sur l'arbre (24), de manière adjacente à l'élément de séparation (14), une section de support (32) dépassant radialement pour supporter temporairement la pile (2), qui est réalisée pour supporter depuis le bas la pile (2) de manière temporaire par prise sur un bord (34) du plateau, de préférence quand l'élément de support de fond (22) n'est pas en prise avec le fond (16) du plateau (18) le plus bas à séparer.

15. Procédé pour séparer un plateau (4) d'une pile (2) de plateaux (4) destinés à accueillir des produits alimentaires en utilisant un dispositif (1) selon au moins l'une quelconque des revendications précédentes, où
a) une pile (2) composée de plusieurs plateaux (4) est fournie dans un système de maintien (8) d'un dispositif (1) destiné à séparer divers plateaux (4) de la pile (2),
b) la pile (2) est supportée de manière temporaire dans une première phase par au moins un élément de support de fond (22) monté de manière à pouvoir être déplacé au moyen d'un système d'entraînement dans la zone du fond (16) du plateau (18) le plus bas de la pile (2),
c) l'au moins un élément de support de fond (22) est déplacé hors de la zone du fond du plateau (18) le plus bas de la pile (2),
d) puis le plateau (18) le plus bas est séparé vers le bas de la pile (2) en raison d'une force dirigée de manière à s'éloigner de la pile (2),
e) et la pile (2) est supportée de manière temporaire au-dessus du plateau (18) le plus bas à séparer au moyen d'une section de support (32) du dispositif de séparation (1) pour supporter de manière temporaire la pile par prise de la section de support (32) sur un bord (34) du plateau depuis le bas, de préférence quand l'élément de support de fond (22) n'est pas en prise avec le fond (16) du plateau (18) le plus bas à séparer.
